# EUROPÄISCHE PATENTSCHRIFT

(11) **EP 3 073 413 B1**
(45) Veröffentlichungstag und Bekanntmachung des Hinweises auf die Patenterteilung: **15.05.2019**
(21) Anmeldenummer: 15182305.1
(22) Anmeldetag: 25.08.2015
(51) Int. Cl.: G06F 21/87, H05K 1/02, H05K 3/24, H05K 3/10

(54) **SCHUTZANORDNUNG FÜR EINE ELEKTRONISCHE SCHALTUNG UND VERFAHREN ZU DEREN HERSTELLUNG**
PROTECTION ASSEMBLY FOR AN ELECTRONIC CIRCUIT AND METHOD OF MANUFACTURING THE SAME
SYSTEME DE PROTECTION POUR UN CIRCUIT ELECTRONIQUE ET SON PROCEDE DE FABRICATION

(30) Priorität: 24.03.2015 DE 102015003774
(43) Veröffentlichungstag der Anmeldung: 28.09.2016
(73) Patentinhaber: Rohde & Schwarz SIT GmbH, 12489 Berlin (DE)
(72) Erfinder: MÜLLER, Roswitha, 71540 Murrhardt (DE); FANDRICH, Lothar, 74405 Gaildorf (DE)
(74) Vertreter: Körfer, Thomas

(56) Entgegenhaltungen:
- EP-A1- 1 462 907
- DE-A1-102007 046 026
- DE-A1-102007 057 948
- DE-B- 1 243 746
- US-A1- 2013 051 018
- US-A1- 2013 156 616
- US-A1- 2013 283 386
- US-B1- 6 355 316

## Beschreibung

Die Erfindung betrifft eine Schutzanordnung für eine elektronische Schaltung und ein Verfahren zu deren Herstellung.

Innerhalb von elektronischen Geräten auf dem Gebiet der Informationssicherheit werden sicherheitsrelevante Objekte in abgeschlossenen technischen Einheiten, den sogenannten Sicherheitsmodulen zusammengefasst um die Vertraulichkeit, Integrität und Verfügbarkeit der enthaltenen Daten zu gewährleisten. Eine weitere Aufgabe solcher Sicherheitsmodule ist es, den Aufbau der Leiterplatten vor einem Ausspähen und Kopieren zu schützen.

Solche Sicherheitsmodule verfügen über sog. Anti-Tamper-Mechanismen (Aufspähungs-Schutzmechanismen) zum Schutz der enthaltenen Sicherheitsobjekte. Zu diesen Mechanismen gehört eine äußere Schutzhülle, mit der Angriffe auf das Innere eines Moduls erkannt werden können (sog. Tamper Detection), um daraus entsprechende Schutzreaktionen ableiten zu können (sog. Tamper Response).

Eine solche Schutzanordnung ist beispielsweise in der WO 2009/043387 A1 beschrieben. Dort wird eine Abdeckung in Form einer Kunststoffhaube durch Spritzgießen hergestellt und anschließend werden Leiterbahnen auf der Oberfläche der Kunststoffhaube durch entsprechende Metallisierung aufgebracht. Die Herstellung der Abdeckung in einem Kunststoff-Spritzgussverfahren hat jedoch den Nachteil, dass der Kunststoffkörper nur mit einer begrenzten Genauigkeit hergestellt werden kann, weil es infolge des Abkühlens nach dem Spritzguss-Prozess zu einem Verziehen des Kunststoff-Körpers kommt. Das Verziehen ist nicht ganz reproduzierbar, d.h. von Kunststoffkörper zu Kunststoffkörper ist der Verzug etwas unterschiedlich, was zu relativ hohen maßlichen Toleranzen führt. Dies hat zur Folge, dass insbesondere an den Bindenähten der geforderte Leiterbahnabstand nur schwer eingehalten werden kann. Der geforderte Leiterbahnabstand ist aber ein Sicherheitsmerkmal des Tamperschutzes. Darüber hinaus hat die Herstellung im Spritzguss-Verfahren den Nachteil, dass teure Spritzguss-Werkzeuge erstellt werden müssen, die sich erst bei sehr hohen Stückzahlen amortisieren.

In der US 2013/0283386 A1 ist zwar bereits vorgeschlagen worden, die Abdeckung aus einem metallischen Element zu fertigen und zwischen einer leitenden Schicht eine isolierende Schicht anzuordnen. Nähere Angaben, wie die isolierende Schicht und die leitende Schicht hergestellt werden sollen, finden sich in dieser Druckschrift aber nicht.

Aus der EP 1 462 907 A1 geht eine Schutzanordnung mit einer Leiterplatte mit den Merkmalen des Oberbegriffs des Anspruchs 1 und ein Verfahren mit dem Oberbegriff des Anspruchs 8 hervor.

Der Erfindung liegt die Aufgabe zugrunde, eine Schutzanordnung zu schaffen, die sich besonders einfach, effizient und reproduzierbar herstellen lässt. Außerdem soll ein entsprechendes Herstellungsverfahren angegeben werden.

Die Erfindung wird bezüglich der Schutzanordnung durch die Merkmale des Anspruchs 1 und bezüglich des Verfahrens durch die Merkmale des Anspruchs 8 gelöst. Die davon abhängigen Ansprüche enthalten vorteilhafte Weiterbildungen der Erfindung.

Der Erfindung liegt die Erkenntnis zugrunde, die isolierende Beschichtung zwischen den Leiterbahnen und der aus einem Metall oder einem Glas gefertigten Abdeckung als Pulverbeschichtung oder Nasslackbeschichtung auszuführen. Diese Pulverbeschichtung oder Nasslackbeschichtung kann besonders effizient und kostengünstig aufgebracht werden und es kann bei der Pulverbeschichtung auf bekannte Standardverfahren zurückgegriffen werden, die z.B. in den Normen DIN 55633, EN 15773 und EN 12981 definiert sind.

Bei der Nasslackbeschichtung kann es sich vorzugsweise um ein 2-K Polyurethan-System mit einem Isocyanat-Härter handeln.

Die Herstellung der Abdeckung aus einem Metall kann besonders einfach durch ein spanabhebendes Verfahren mit sehr hoher Reproduzierbarkeit erfolgen. Mit ähnlicher Genauigkeit kann die Abdeckung auch aus Glas gefertigt werden. Die Pulverbeschichtung oder Nasslackbeschichtung garantiert eine homogene Schichtdicke, insbesondere auch an Kanten und Ecken. Die Pulverbeschichtung oder Nasslackbeschichtung ist auch für die Großserie geeignet und gewährleistet eine Spannungs-Durchschlagsfestigkeit von mindestens 4 kV. Auch die Wärmeleitfähigkeit der Pulverbeschichtung oder Nasslackbeschichtung ist ausreichend groß.

Bevorzugt wird dem Pulver für die Pulverbeschichtung oder Nasslackbeschichtung neben den üblichen Harzen, beispielsweise Epoxid- oder Polyesterharzen, zusätzlich eine metallische Komponente, bevorzugt aus Indium, zugesetzt. Die Stellen, an welchen später eine Leiterbahn ausgebildet werden soll, kann nach Aufbringung der Pulverbeschichtung oder Nasslackbeschichtung dann mit einem Laser thermisch behandelt werden. Dabei ergeben sich nicht nur Vertiefungen an diesen Stellen, sondern das metallische Additiv ist an der Oberfläche dieser Stellen mit besonders hoher Konzentration vorhanden aktiviert, da die Konzentration der organischen Komponenten, insbesondere der Harze, infolge der Erwärmung durch die Laserbestrahlung verdampfen. In einem nachfolgendem galvanischen Prozessschritt lagern sich die Metall-Ionen des Materials, aus welchem die Leiterbahnen gebildet werden sollen, daher nur in diesen Regionen nicht aber in jenen Regionen, welche nicht der Laserbestrahlung unterworfen wurden, an.

Bevorzugt bestehen die Leiterbahnen aus Kupfer und sind mit einer ersten dünnen Schutzschicht, bevorzugt aus Nickel überzogen. Weiter bevorzugt, ist eine zweite dünne Schutzschicht über der ersten Schutzschicht vorhanden, die bevorzugt aus Gold besteht.

Die Dicke der Pulverschichtung oder Nasslackbeschichtung beträgt bevorzugt 50 µm bis 200 µm, bevorzugt 60 bis 150 µm besonders bevorzugt 80 µm bis 120 µm.

Die Dicke der Leiterbahnen beträgt vorzugsweise 6 µm bis 10 µm.

Die Dicke der ersten Schutzschicht, bevorzugt der Nickelschicht, beträgt 1 µm bis 10 µm, bevorzugt 2 µm bis 7 µm, besonders bevorzugt 3 µm bis 5 µm.

Die Dicke der zweiten Schutzschicht, bevorzugt der Goldschicht, beträgt 0,01 µm bis 1 µm, bevorzugt 0,05 µm bis 0,5 µm, besonders bevorzugt 0,08 µm bis 0,12 µm.

Die Leiterbahnen mit den Schutzschichten werden anschließend bevorzugt mit einer Schutzlackschicht als Feuchtigkeitsschutz überzogen.

Die Abdeckung besteht bevorzugt aus Aluminium, das sich besonders einfach und maßhaltig durch ein spanabhebendes Verfahren, insbesondere durch Fräsen bearbeiten lässt. In Betracht kommen aber natürlich auch andere Metalle, wie Edelstahl, Messing oder Kupfer.

Bevorzugte Ausführungsbeispiele der Erfindung werden nachfolgend unter Bezugnahme auf die Zeichnung lediglich beispielhaft beschrieben. In der Zeichnung zeigt:
- Fig. 1: ein Beispiel für die Verwendung der erfindungsgemäßen Schutzanordnung bei einem Kryptomodul;
- Fig. 2: die Vorbereitung der Herstellung der Leiterbahn mittels Laserstrahl;
- Fig. 3: eine Draufsicht auf die mit der Beschichtung und den Leiterbahnen versehene Abdeckung eines Ausführungsbeispiels der erfindungsgemäßen Schutzanordnung;
- Fig. 4: einen Schnitt durch die mit der Beschichtung und mit den Leiterbahnen versehene Abdeckung entsprechend einem erfindungsgemäßen Ausführungsbeispiel und
- Fig. 5: ein Flussdiagramm eines Ausführungsbeispiels des erfindungsgemäßen Herstellungsverfahrens.

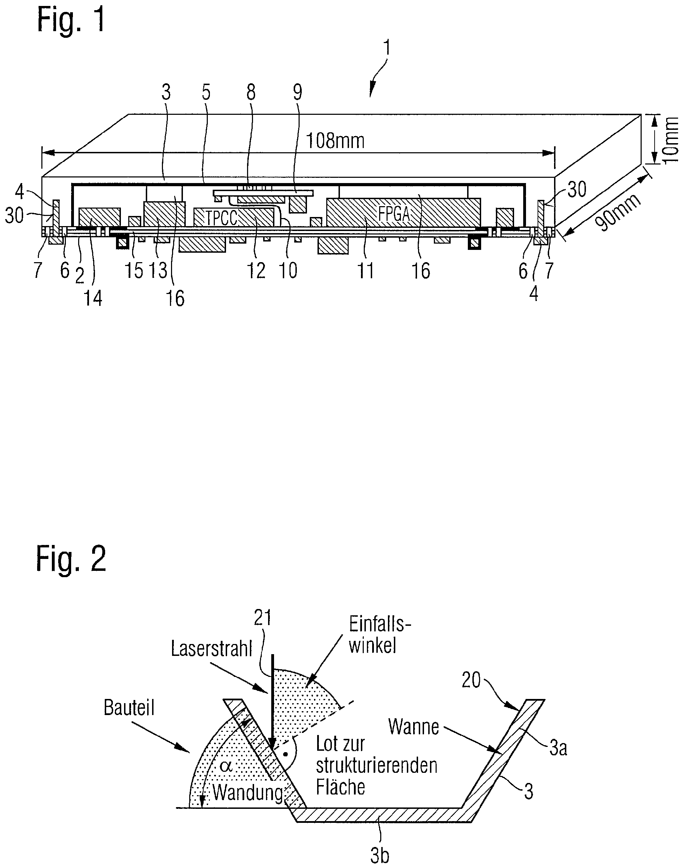

Fig. 1 zeigt ein Ausführungsbeispiel der erfindungsgemäßen Schutzanordnung 1 bei Verwendung in Verbindung mit einem Kryptomodul. Die in Fig. 1 gezeigten Abmessungen sind lediglich beispielhaft zu verstehen und dienen zur Verdeutlichung der Größenordnung der Miniaturisierung des Kryptomoduls. Die Schutzanordnung 1 besteht aus einer Leiterplatte 2 und einer Abdeckung 3. Die Abdeckung 3 kann Sacklöcher 30 mit Gewindeeinschneidungen aufweisen, wobei durch die Leiterplatte 2 hindurchgeführten Schrauben 4 in die Gewinde eingreifen.

Die Abdeckung 3 besteht erfindungsgemäß entweder aus einem Metall, bevorzugt aus Aluminium oder aus Glas. Neben Aluminium kommen aber auch andere Metalle, die sich möglichst gut spanend bearbeiten lassen, infrage, beispielsweise Messing, Kupfer oder Edelstahl. Gemäß einem anderen erfindungsgemäßen Konzept kann die Abdeckung 3 auch aus einem Glas gefertigt sein. Auf der Abdeckung 3 befindet sich erfindungsgemäß eine Pulverbeschichtung oder Nasslackbeschichtung, die in Fig. 1 nicht erkennbar ist. Auf der Pulverbeschichtung oder Nasslackbeschichtung befinden sich Leiterbahnen 5, die mäanderartig innenseitig auf der Unterseite und den Flanken der Abdeckung 3 verteilt sind. Die Leiterbahnen 5 können über Kontaktpunkte 6 mit der Leiterplatte 2 verbunden sein. Weitere Kontaktpunkte 7 dienen dazu, eine Masseverbindung zwischen der Leiterplatte 2 und der Abdeckung 3 herzustellen, insbesondere wenn die Abdeckung 3 aus einem Metall gefertigt ist.

Über Kontaktpunkte 8 können die Leiterbahnen 5 mit einer optional vorhandenen Tochterplatine 9 für eine Smartcard oder für einen Tamperschutz-Controller verbunden sein. Die Tochterplatine 9 kann über eine Kabelverbindung 10, beispielsweise eine Flexverbindung, mit der Hauptplatine 2 verbunden sein.

Auf der Leiterplatte 2 befinden sich Speicher oder andere Bauelemente, mit speichernden Eigenschaften, beispielsweise der FPGA (Field Programmable Gate Array; Deutsch: Feld einer programmierbaren Gutter Anordnung) 11. Diese Bauelemente mit speichernden Eigenschaften enthalten wichtige und ggf. vertrauliche Informationen, welche vor einer Ausspähung geschützt werden sollen. Eine Ausspähung könnte beispielsweise dadurch erfolgen, dass die Abdeckung 3 durchbohrt wird oder aufgefräst wird, um dann die Bauelemente mit speichernden Eigenschaften elektrisch zu kontaktieren und die dort gespeicherten Informationen auszulesen. Beispielsweise könnte die Information aus einem DRAM 14 oder SRAM 13 oder die Schaltungsinformation des FPGA 11 ausgelesen werden.

Um dies zu verhindern, hat die Abdeckung 3 die bereits erwähnten über die Unterseite und Seitenbereiche der Abdeckung 3 mäanderartig verteilen Leiterbahnen 5. Ein Manipulieren der Abdeckung 3, beispielsweise durch Anbohren oder Anfräsen, verändert die elektrischen Eigenschaften der Leiterbahnen 5, insbesondere deren Widerstand, deren Kapazität oder deren Induktivität, sodass diese Manipulation durch eine entsprechende Auswerteelektronik, beispielsweise einen Tamper-Controller TPCC 12, erkannt wird. Die Änderung der Kapazität kann dabei einerseits zwischen jeder Leiterbahn 5a bzw. 5b und der Abdeckung 3 und andererseits zwischen den Leiterbahnen 5a und 5b gemessen werden. Erkennt der Tamper-Controller 12 eine solche Manipulation, wird die auf dem SRAM 13, dem DRAM 14 und dem FPGA 11 gespeicherte Information umgehend gelöscht. Die Information steht dann nach Freilegung der Abdeckung 3 nicht mehr zur Verfügung und kann nicht mehr ausgelesen werden.

Die Bauelemente mit speichernden Eigenschaften 13, 14 und 11 sind dabei auf derjenigen Seite der Leiterplatte 2 angeordnet, die von der Abdeckung 3 abgedeckt ist. Auf der Unterseite der Leiterplatte 2 befinden sich dann nur Bauelemente, die hinsichtlich einer Ausspähung unkritisch sind. In der Leiterplatte 2, die in der Regel als Multilayer-Platine aufgebaut ist, befindet sich bevorzugt ebenfalls eine Schicht 15 mit mäanderartig angeordneten Leiterbahnen. Diese ermöglichen es dem Tamper-Controller 12, eine Manipulation, beispielsweise ein Anbohren oder ein Anfräsen von der Leiterplatte 2 her zu detektieren und daraufhin ebenfalls umgehend die speichernden Bauelemente 11, 13 und 14 zu löschen. Wenn sich auch auf der Unterseite speichernde Bauelemente mit kritischem Inhalt befinden, kann von der Unterseite her eine zweite Abdeckung 3 montiert werden.

Um die Kühlung zu verbessern, kann zwischen einigen Bauelementen und die Unterseite der Abdeckung 3 ein die Wärme gut leitendes Füllmaterial 16 eingefügt sein. Im dargestellten Ausführungsbeispiel ist dies zwischen dem FPGA 11 und der Abdeckung 3 einerseits und zwischen SRAM 13 und der Abdeckung 8 andererseits der Fall.

Wenn die Abdeckung 3 aus einem Metall, beispielsweise Aluminium, gefertigt wurde, kann sie beispielsweise durch ein spanabhebendes Verfahren, insbesondere Fräsen, hergestellt werden. Dadurch kann eine sehr hohe Fertigungsgenauigkeit erreicht werden, die wesentlich höher ist, als bei der Fertigung der Abdeckung 3 aus einem Kunststoffmaterial in einem Spritzguss-Verfahren. Die Maße der Abdeckung 3 werden für jedes Teil auch mit einer sehr hohen Reproduktionsgenauigkeit erreicht. Eine andere Möglichkeit der Herstellung der metallischen Abdeckung 3 besteht z.B. in einem Tiefzieh-Verfahren, das ebenfalls mit einer hohen Reproduktionsgenauigkeit erfolgen kann.

Nachfolgend wird die Abdeckung 3 innenseitig mit einer Pulverbeschichtung oder Nasslackbeschichtung 20 versehen, die in Fig. 2 angedeutet ist. Bei dem Ausführungsbeispiel der Fig. 2 ist die Abdeckung 3 wannenartig ausgebildet, d.h. die Abdeckung 3 umschließt nicht wie in Fig. 1 einen rechteckförmigen sondern ein trapezförmigen Querschnitt.

Die Pulverbeschichtung oder Nasslackbeschichtung 20 wird nachfolgend durch Laserbestrahlung mittels eines Laserstrahls 21 strukturiert. Als Laser eignet sich dabei jeder Laser, der eine genügend hohe Energiedichte bereitstellen kann, beispielsweise ein CO₂-Laser oder ein Nd-YAG-Laser. Dabei ist es von Vorteil, wenn der Laserstrahl 21 nicht verschwenkt werden muss, sondern bei der gesamten Strukturierung von einer Seite, in Fig. 2 oben, zugeführt werden kann. Dies setzt allerdings voraus, dass die Seitenteile 3a der wannenartig ausgebildeten Abdeckung 3 keinen allzu großen Neigungswinkel α_{Wandung}, haben. In der Praxis hat sich gezeigt, dass diese Art der Strukturierung noch bis zu einem Winkel α_{Wandung} von 70° funktioniert. Bei größeren Wandsteilheiten muss die Abdeckung 3 gegenüber dem Laserstrahl 21 verschwenkt werden.

Auf Grund der hohen Fertigungsgenauigkeit der Abdeckung 3 kann mit einem Leiterbahnen-Pitch von 300 µm gearbeitet werden, was die Herstellung von Leiterbahnen mit einer Breite von 150 µm ermöglicht. Dabei sollte die Laserstrahlbreite allerdings 60 µm bis 70 µm betragen.

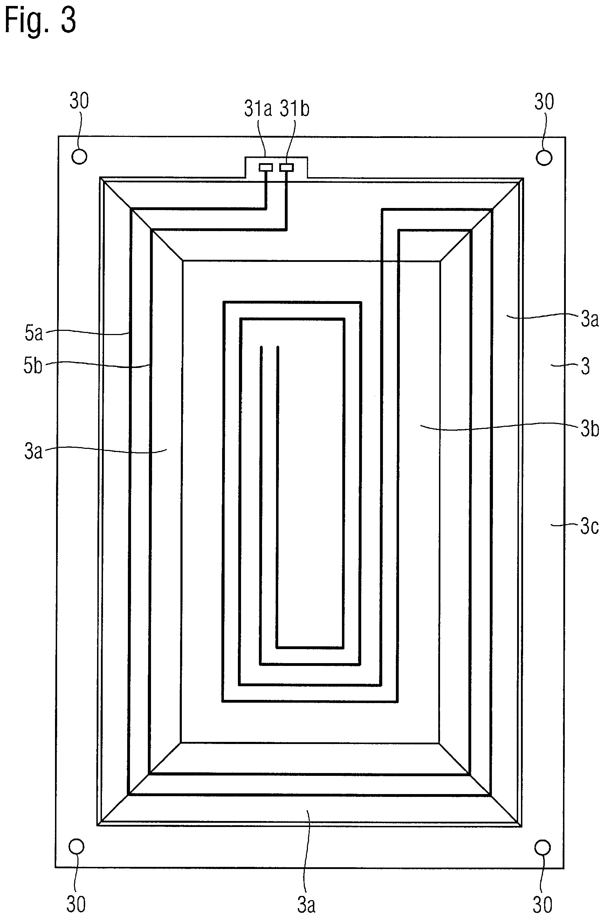

Fig. 3 zeigt eine Draufsicht auf die mit den Leiterbahnen 5a und 5b versehene Abdeckung 3. Die Wanne der Abdeckung 3 hat dabei vier Seitenteile 3a einen Plateau-Bereich 3b und einen umlaufenden Randbereich 3c. Entscheidend für die Sicherheit ist dass der Randbereich 3c minimal ist. Dies setzt geringe Toleranzen der Metallhaube voraus. Wie in Fig. 3 gezeigt, befinden sich die Leiterbahnen 5a und 5b dabei sowohl im Seitenbereich 3a als auch im Plateau-Bereich 3b. Die Leiterbahnen 5a und 5b können regelmäßig oder unregelmäßig verteilt sein. Es ist auch möglich, von Einzelstück zu Einzelstück eine andere zufällig gewählte Verteilung der Leiterbahnen zu wählen. Die in Fig. 3 gezeigte Verteilung der Leiterbahnen dient nur der prinzipiellen Demonstration und ist nicht identisch mit der tatsächlich gewählten Konfiguration der Leiterbahnen.

Im Randbereich 3c können die Leiterbahnen 5a und 5b jeweils an einem Kontaktstellen 31a und 31b geführt sein, welche mit den in Fig. 1 gezeigten Kontaktpunkten 6 der Leiterplatte 2 korrespondieren. Über diese Kontaktstellen 31a und 31b und entsprechende Leiterbahnen innerhalb der Leiterplatte 2 besteht dann eine Verbindung mit dem Tamper-Controller 12. An den Stellen 30 befinden sich die anhand der Fig. 1 bereits beschriebenen Gewinde-Sackbohrungen 30, in welche die Schrauben 4 eingreifen.

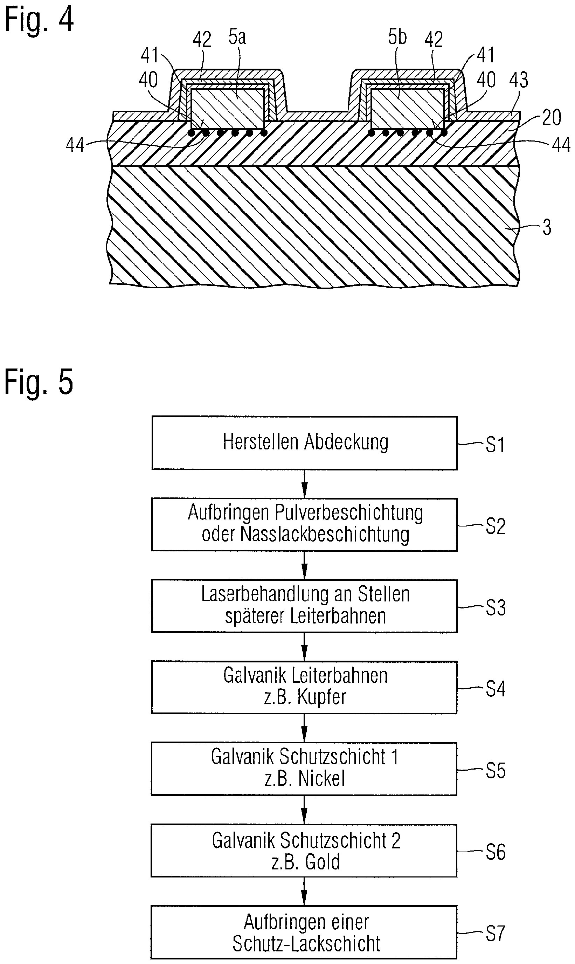

Fig. 4 zeigt einen Schnitt durch die Abdeckung 3, die Pulverbeschichtung oder Nasslackbeschichtung 20 und die beiden Leiterbahnen 5a und 5b. Wie bereits erwähnt, enthält das bei der Pulverbeschichtung oder Nasslackbeschichtung 20 verwendete Pulver ein metallisches Additiv, bevorzugt aus Indium. Bei der anhand von Fig. 2 erläuterten Laserbehandlung wird der Laserstrahl 21 über diejenigen Stellen der Pulverbeschichtung oder Nasslackbeschichtung 20 gelenkt, auf welchen später eine Leiterbahn 5a bzw. 5b entstehen soll. Dabei verdampfen die organischen Bestandteile der Pulverbeschichtung oder Nasslackbeschichtung, die beispielsweise durch Epoxidharze oder Polyesterharze gebildet sind. Dadurch entstehen Vertiefungen 40. An der Oberfläche der Vertiefungen 40 ist die Konzentration des metallischen Additivs deutlich höher als an jenen Stellen, die von dem Laserstrahl nicht getroffen wurden. Dieser Bereich erhöhter Konzentration des Additivs ist mit den Bezugszeichen 44 angedeutet.

Nach dieser Laserbehandlung wird die Abdeckung 3 mit der Pulverbeschichtung 30 in ein beispielsweise Kupfer-Ionen enthaltendes erstes Galvanik-Bad getaucht und eine Galvanik-Spannung angelegt. Die Kupfer-Ionen lagern sich dann bevorzugt an der Oberfläche der Vertiefungen 40 an, weil sie an das dort in höherer Konzentrat vorhandene metallische Additiv gut anbinden können. Dadurch wachsen die entsprechenden Leiterbahnen 5a bzw. 5b nur an diesen Stellen und nicht an den mit dem Laser nicht behandelten Stellen auf. Statt einem Kupfer-Galvanik-Bad kann natürlich auch jedes andere metallische Galvanik-Bad verwendet werden.

Um die Leiterbahnen 5a und 5b vor Korrosion zu schützen, besonders wenn sie aus Kupfer bestehen, werden diese mit einer ersten Schutzschicht 40, bevorzugt aus Nickel, überzogen, indem die Abdeckung 3 mit der Pulverbeschichtung oder Nasslackbeschichtung 20 und den Leiterbahnen 5a und 5b in ein entsprechendes zweites Galvanik-Bad, beispielsweise ein Nickel-Ionen-Bad, getaucht wird und eine entsprechende Galvanik-Spannung angelegt wird. Diese erste Schutzschicht kann in einigen Anwendungsfällen schon ausreichen. Besonders bevorzugt wird aber eine zweite dünne Schutzschicht, bevorzugt aus Gold, aufgebracht. Hierzu wird die Abdeckung 3 mit der Pulverbeschichtung 20 und den mit der ersten Schutzschicht 41 überzogenen Leiterbahnen 5a und 5b in ein drittes Galvanik-Bad getaucht und wiederum eine entsprechende Galvanik-Spannung angelegt.

Die Leiterbahnen 5a und 5b können mit samt ihren Schutzschichten 41 und 42 noch mit einer Schutzlackschicht 43 überzogen werden. Es kann vorteilhaft sein, die Schutzlackschicht großflächig aufzubringen, sodass sie neben den Leiterbahnen 5a und 5b auch die nicht mit Leiterbahnen bedeckten Bereiche der Pulverbeschichtung oder Nasslackbeschichtung 20 überdeckt. Die Lackschicht 43 ist vorzugsweise hydrophob, um Feuchtigkeit abzuweisen und einer möglichen Korrosion entgegenzuwirken.

Anhand des in Fig. 5 dargestellten Flussdiagramms werden die einzelnen Fertigungsschritte noch einmal verdeutlicht.

In dem ersten Verfahrensschritt S1 erfolgt die Herstellung der Abdeckung 3, wie dies erfindungsgemäß bevorzugt ist, aus einem Metall, insbesondere aus Aluminium. Dabei kann die Abdeckung 3 in einfacher Weise durch ein spanabhebendes Verfahren, insbesondere Fräsen hergestellt werden. Gegebenenfalls eignet sich jedoch auch ein beispielsweise ein Zieh-Verfahren. Entsprechend einer erfindungsgemäßen Alternative kann die Abdeckung 3 auch aus einem Glas bestehen. Dann wird die Abdeckung 3 in zweckmäßiger Weise durch ein entsprechendes Schmelz-Formverfahren hergestellt. Der sich bei der Abkühlung einstellende Verzug ist auch bei diesem Verfahren wesentlich kleiner, als bei einem Kunststoff-Spritzguss-Verfahren, welches nach dem Stand der Technik zur Herstellung der Abdeckung 3 verwendet wird.

Anschließend erfolgt die Aufbringung der Pulverbeschichtung oder Nasslackbeschichtung in einem zweiten Verfahrensschritt S2. Die Dicke der Pulverbeschichtung beträgt oder Nasslackbeschichtung dabei vorzugsweise 50 µm bis 200 µm, weiter bevorzugt 60 µm bis 150 µm und besonders bevorzugt 80 µm bis 120 µm. Dabei beträgt die Eindringtiefe des Lasers in die Pulverbeschichtung oder Nasslackbeschichtung bevorzugt ca. 5 µm. Dabei entsteht eine Aussparung 40, die ca. 10 µm tief ist.

Anschließend erfolgt im Verfahrensschritt S3 die in Fig. 2 gezeigte Laserbehandlung an jenen Stellen, die später mit Leiterbahnen 5a und 5b versehen werden sollen.

In einem vierten Verfahrensschritt S4 erfolgt die galvanische Ausbildung der Leiterbahnen. Hierfür wird bevorzugt ein Kupfer-Galvanik-Bad verwendet.

In einem fünften Verfahrensschritt S5 erfolgt die optionale Aufbringung einer ersten Schutzschicht 41 in einem zweiten Galvanik-Bad. Die erste Schutzschicht 41 besteht vorzugsweise aus Nickel und hat bevorzugt eine Dicke von 1 µm bis 10 µm, weiter bevorzugt von 2 µm bis 7 µm und besonders bevorzugt von 3 µm bis 5 µm.

In einem weiteren optionalen Verfahrensschritt S6 erfolgt dann die galvanische Aufbringung der zweiten Schutzschicht, bevorzugt aus Gold. Diese hat bevorzugt eine Dicke von 0,01 µm bis 1 µm, weiter bevorzugt von 0,05 µm bis 0,5 µm und besonders bevorzugt von 0,08 µm bis 0,12 µm.

In einem weiteren optionalen Verfahrensschritt S7 wird über die gesamte Oberseite der Abdeckung 3, also sowohl über Bereiche, in welchen die Leiterbahnen 5a und 5b aufgebracht sind, als auch in Bereichen der Pulverbeschichtung oder Nasslackbeschichtung 20, in welchen keine Leiterbahnen 5a und 5b aufgebracht sind, mit einer Lackschicht 43 überzogen.

Die Erfindung ist nicht auf die vorstehend genannten Ausführungsbeispiele beschränkt. Alle vorstehend beschriebenen oder in den Ansprüchen beanspruchten oder in den Zeichnungen gezeichneten Merkmale sind im Rahmen dieser Erfindung beliebig miteinander kombinierbar.

## Patentansprüche

1. Schutzanordnung (1) mit
einer Leiterplatte (2) und
einer auf zumindest einer Seite der Leiterplatte (2) angeordneten Abdeckung (3) mit Leiterbahnen (5; 5a, 5b), wobei die Abdeckung (3) aus einem Metall oder Glas besteht, und
einer zwischen den Leiterbahnen (5; 5a, 5b) und der Abdeckung (3) angeordneten Beschichtung,
**dadurch gekennzeichnet,**
**dass** die Beschichtung eine Pulverbeschichtung oder Nasslackbeschichtung (20) ist, die ein metallisches Additiv enthält.

2. Schutzanordnung nach Anspruch 1,
**dadurch gekennzeichnet,**
**dass** die Pulverbeschichtung oder Nasslackbeschichtung (20) ein metallisches Additiv aus Indium enthält.

3. Schutzanordnung nach Anspruch 1 oder 2,
**dadurch gekennzeichnet,**
**dass** die Dicke der Pulverbeschichtung oder Nasslackbeschichtung (20) 50 µm bis 200 µm, bevorzugt 60 µm bis 150 µm, besonders bevorzugt 80 µm bis 120 µm, beträgt.

4. Schutzanordnung nach einem der Ansprüche 1 bis 3,
**dadurch gekennzeichnet,**
**dass** die Leiterbahnen (5; 5a, 5b) aus Kupfer bestehen.

5. Schutzanordnung nach einem der Ansprüche 1 bis 4,
**dadurch gekennzeichnet,**
**dass** die Leiterbahnen (5; 5a, 5b) mit einer dünnen ersten Schutzschicht, bevorzugt aus Nickel, gefolgt von einer dünnen zweiten Schutzschicht (41), bevorzugt aus Gold, überzogen sind.

6. Schutzanordnung nach Anspruch 5,
**dadurch gekennzeichnet,**
**dass** die Dicke der ersten Schutzschicht (40) 1 µm bis 10 µm, bevorzugt 2 µm bis 7 µm, besonders bevorzugt 3 µm bis 5 µm, beträgt.

7. Schutzanordnung nach einem der Ansprüche 5 oder 6,
**dadurch gekennzeichnet,**
**dass** die Dicke der zweiten Schutzschicht (41) 0,01 µm bis 1 µm, bevorzugt 0,05 µm bis 0,5 m, besonders bevorzugt 0,08 µm bis 0,12 µm, beträgt.

8. Verfahren zur Herstellung einer Schutzanordnung (1), insbesondere nach einem der Ansprüche 1 bis 7,
mit folgenden Verfahrensschritten:
- Herstellen (51) einer Abdeckung (3) aus einem Metall oder Glas;
- Aufbringen (52) einer Beschichtung auf der Abdeckung,
- Aufbringen (54) von Leiterbahnen (5; 5a, 5b) auf der Beschichtung,
**dadurch gekennzeichnet,**
**dass** die Beschichtung als eine Pulverbeschichtung (20) oder Nasslackbeschichtung aufgebracht wird, die ein metallisches Additiv enthält.

9. Verfahren nach Anspruch 8,
**dadurch gekennzeichnet,**
**dass** die Pulverbeschichtung oder Nasslackbeschichtung (20) ein metallisches Additiv aus Indium enthält.

10. Verfahren nach Anspruch 9,
**dadurch gekennzeichnet,**
**dass** die Pulverbeschichtung oder Nasslackbeschichtung (20) an den Stellen, wo eine Leiterbahn (5; 5a, 5b) ausgebildet werden soll, mit einem Laserstrahl (21) bestrahlt wird, wodurch die Konzentration des metallischen Additivs an der Oberfläche der Pulverbeschichtung oder Nasslackbeschichtung (20) erhöht wird.

11. Verfahren nach Anspruch 10,
**dadurch gekennzeichnet,**
**dass** in der Pulverbeschichtung oder Nasslackbeschichtung (20) an den Stellen, wo sie mit dem Laserstrahl (21) bestrahlt wird, Vertiefungen (40) ausgebildet werden.

12. Verfahren nach einem der Ansprüche 8 bis 11,
**dadurch gekennzeichnet,**
**dass** die Abdeckung (3) aus einem Metall, insbesondere Aluminium, besteht und durch einen spanabhebenden Verfahrensschritt, insbesondere Fräsen, hergestellt wird.

13. Verfahren nach einem der Ansprüche 8 bis 12,
**dadurch gekennzeichnet,**
**dass** die Leiterbahnen (5; 5a, 5b) mit einer Schutzlackschicht (43) überzogen werden.

## Claims

1. Protection arrangement (1) with
a circuit board (2) and
a covering (3) with conductor tracks (5; 5a, 5b) which is disposed on at least one side of the circuit board (2), the covering (3) being made of a metal or glass, and
a coating disposed between the conductor tracks (5; 5a, 5b) and the covering (3),
**characterised in that**
the coating is a powder coating or wet lacquer coating (20) which contains a metallic additive.

2. Protection arrangement according to claim 1,
**characterised in that**
the powder coating or wet lacquer coating (20) contains a metallic additive of indium.

3. Protection arrangement according to claim 1 or 2,
**characterised in that**
the thickness of the power coating or wet lacquer coating (20) is 50 µm to 200 µm, preferably 60 µm to 150 µm, particularly preferably 80 µm to 120 µm.

4. Protection arrangement according to one of claims 1 to 3,
**characterised in that**
the conductor tracks (5; 5a, 5b) are made of copper.

5. Protection arrangement according to one of claims 1 to 4,
**characterised in that**
the conductor tracks (5; 5a, 5b) are coated with a thin first protective coating, preferably of nickel, followed by a thin second protective coating (41), preferably of gold.

6. Protection arrangement according to claim 5,
**characterised in that**
the thickness of the first protective coating (40) is 1 µm to 10 µm, preferably 2 µm to 7 µm, particularly preferably 3 µm to 5 µm.

7. Protection arrangement according to one of claims 5 or 6,
**characterised in that**
the thickness of the second protective coating (41) is 0.01 µm to 1 µm, preferably 0.05 µm to 0.5 µm, particularly preferably 0.08 µm to 0.12 µm.

8. Method for producing a protection arrangement (1), in particular according to one of claims 1 to 7,
with the following method steps:
- production (51) of a covering (3) made of a metal or glass;
- application (52) of a coating on the covering,
- application (54) of conductor tracks (5; 5a, 5b) on the coating,
**characterised in that**
the coating is applied in the form of a powder coating (20) or wet lacquer coating which contains a metallic additive.

9. Method according to claim 8,
**characterised in that**
the powder coating or wet lacquer coating (20) contains a metallic additive of indium.

10. Method according to claim 9,
**characterised in that**
the powder coating or wet lacquer coating (20) is irradiated with a laser beam (21) in the locations in which a conductor track (5; 5a, 5b) is to be formed, through which the concentration of the metallic additive is increased at the surface of the powder coating or wet lacquer coating (20).

11. Method according to claim 10,
**characterised in that**
depressions (40) are formed in the powder coating or wet lacquer coating (20) in the locations in which it is irradiated with the laser beam (21).

12. Method according to one of claims 8 to 11,
**characterised in that**
the covering (3) is made of a metal, in particular aluminium, and produced by a metal-removing method step, in particular milling.

13. Method according to one of claims 8 to 12,
**characterised in that**
the conductor tracks (5; 5a, 5b) are coated with a protective lacquer coating (43).

## Revendications

1. Système de protection (1) comportant :
une carte à circuit imprimé (2) et
un revêtement (3) disposé sur au moins une face de la carte à circuit imprimé (2) avec des pistes conductrices (5 ; 5a, 5b),
dans lequel le revêtement (3) est constitué d'un métal ou de verre, et
une couche disposée entre les pistes conductrices (5 ; 5a, 5b) et le revêtement (3),
**caractérisé en ce que**
la couche contient une couche de poudre ou une couche de vernis liquide (20) qui contient un additif métallique.

2. Système de protection selon la revendication 1,
**caractérisé en ce que**
la couche de poudre ou la couche de vernis liquide (20) contient un additif métallique sous forme d'indium.

3. Système de protection selon la revendication 1 ou 2,
**caractérisé en ce que**
l'épaisseur de la couche de poudre ou de la couche de vernis liquide (20) est de 50 µm à 200 µm, de préférence de 60 µm à 150 µm, de manière particulièrement préférée de 80 µm à 120 µm.

4. Système de protection selon l'une des revendications 1 à 3,
**caractérisé en ce que**
les pistes conductrices (5 ; 5a, 5b) sont en cuivre.

5. Système de protection selon l'une des revendications 1 à 4,
**caractérisé en ce que**
les pistes conductrices (5 ; 5a, 5b) sont revêtues d'une première couche de protection mince, de préférence en nickel, suivie d'une seconde couche de protection mince (41), de préférence en or.

6. Système de protection selon la revendication 5,
**caractérisé en ce que**
l'épaisseur de la première couche de protection (40) est de 1 µm à 10 µm, de préférence de 2 µm à 7 µm, de manière particulièrement préférée de 3 µm à 5 µm.

7. Système de protection selon l'une des revendications 5 ou 6,
**caractérisé en ce que**
l'épaisseur de la seconde couche de protection (41) est de 0,01 µm à 1 µm, de préférence de 0,05 µm à 0,5 µm, de manière particulièrement préférée de 0,08 µm à 0,12 µm.

8. Procédé pour fabriquer un système de protection (1), en particulier selon l'une des revendications 1 à 7, comportant les étapes suivantes consistant à :
- préparer (51) un revêtement (3) constitué d'un métal ou de verre ;
- appliquer (52) une couche sur le revêtement,
- appliquer (54) des pistes conductrices (5 ; 5a, 5b) sur le revêtement,
**caractérisé en ce que**
le revêtement est appliqué sous la forme d'une couche de poudre (20) ou d'une couche de vernis liquide qui contient un additif métallique.

9. Procédé selon la revendication 8,
**caractérisé en ce que**
la couche de poudre ou la couche de vernis liquide (20) contient un additif métallique sous forme d'indium.

10. Procédé selon la revendication 9,
**caractérisé en ce que**
la couche de poudre ou la couche de vernis liquide (20) doit être formée à des endroits où une piste conductrice (5 ; 5a, 5b) est soumise à un faisceau laser (21), en sorte que la concentration de l'additif métallique à la surface de la couche de poudre ou de la couche de vernis liquide (20) est augmentée.

11. Procédé selon la revendication 10,
**caractérisé en ce que**
des cavités (40) sont formées dans la couche de poudre ou la couche de vernis liquide (20) à des endroits où elle est soumise à un faisceau laser (21).

12. Procédé selon l'une des revendications 8 à 11,
**caractérisé en ce que**
le revêtement (3) est constitué d'un métal, en particulier d'aluminium, et est fabriqué par une étape de procédé par enlèvement de copeaux, en particulier un fraisage.

13. Procédé selon l'une des revendications 8 à 12,
**caractérisé en ce que**
les pistes conductrices (5 ; 5a, 5b) sont revêtues d'une couche de vernis de protection (43).
